(19) Europäisches Patentamt
European Patent Office
Office européen des brevets

(11) EP 2 442 659 B1

(12) EUROPEAN PATENT SPECIFICATION

(45) Date of publication and mention
of the grant of the patent:
**30.03.2016 Bulletin 2016/13**

(21) Application number: **10727509.1**

(22) Date of filing: **04.06.2010**

(51) Int Cl.:
*A01P 3/00* *(2006.01)*     *A01N 43/40* *(2006.01)*

(86) International application number:
**PCT/JP2010/003727**

(87) International publication number:
**WO 2010/146791 (23.12.2010 Gazette 2010/51)**

(54) **USE OF A CONTROL AGENT FOR SOFT ROT AND CONTROL METHOD FOR THE SAME**

VERWENDUNG EINES MITTELS GEGEN WEICHFÄULE UND DESSEN VERFAHREN

UTLISATION D'AGENT DE LUTTE CONTRE LA POURRITURE MOLLE ET PROCÉDÉ DE LUTTE CORRESPONDANT

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **17.06.2009   JP 2009144191**
**12.01.2010   JP 2010004308**

(43) Date of publication of application:
**25.04.2012   Bulletin 2012/17**

(73) Proprietor: **Ishihara Sangyo Kaisha, Ltd.**
**Osaka-shi, Osaka 550-0002 (JP)**

(72) Inventors:
• **KURATA, Yoshikazu**
**Tokyo 102-0071 (JP)**
• **HAYASHI, Hiroyuki**
**Kusatsu-shi**
**Shiga 525-0025 (JP)**

(74) Representative: **Müller-Boré & Partner**
**Patentanwälte PartG mbB**
**Friedenheimer Brücke 21**
**80639 München (DE)**

(56) References cited:
**CN-A- 101 653 132     US-A- 3 965 109**

EP 2 442 659 B1

**Description**

The present invention relates to the use of a control agent for soft rot of a plant such as a vegetable, and a control method for soft rot using the control agent.

Soft rot is a plant disease which is caused by Erwinia carotovora and causes plant tissues to become soft and rotten. Examples of a plant to be a target for controlling soft rot include vegetables such as cabbage, celery, Japanese radish, tobacco, onion, tomato, carrot, Chinese cabbage, potato, lettuce, wasabi, oil-seed rape, and the like. Since a usual pesticide is rarely effective in a bacterial disease, an antibiotic such as streptomycin or a copper-based bactericide such as Bordeaux mixture is conventionally applied to a target plant to effect disease control. However, an antibiotic which has been used for controlling a bacterial disease such as soft rot is expensive and also has a problem that resistant bacteria appear. Further, in the case of using a copper-based bactericide, there are problems that (1) when the air temperature is high, phytotoxicity occurs; (2) a disease control effect is not obtained unless a large amount of the bactericide is used, and it raises a concern that metal contamination occurs; and the like. Therefore, the development of a disease control method which solves the problems of the antibiotic and the copper-based pesticide has been demanded.

JP-A-56-092272 describes that a N-pyridylaniline compound containing 3-chloro-N-(3-chloro-5-trifluoromethyl-2-pyridyl)-alpha,alpha,alpha-trifluoro-2,6-dinit ro-p-toluidine (common name: fluazinam) shows an excellent antifungal and antibacterial activity for inhibition and sterilization of harmful fungi and bacteria capable of proliferating in industrial products, seeds, and fruits in storage such as Aspergillus, Gibberella, and Penicillium. Further, it describes that the compound shows an excellent inhibitory effect on growth of insects, mites, and pathogenic fungi and bacteria. However, it is not known that soft rot caused by Erwinia carotovora can be controlled by fluazinam.

US 3,965,109 A describes polysubstituted aryl amino pyridines herbicidal and pesticidal compositions useful in controlling pests including fungal infections of plants, and in inhibiting the growth of unwanted vegetation.

Patent Document 1 JP-A-56-092272

Conventionally used control agents for soft rot have several practical problems that the cost is high, phytotoxicity occurs, the control effect on a plant disease is not sufficient depending on the applied condition, and so on. Therefore, an object to be achieved by the invention is to provide a control agent for soft rot and a control method for the same by which the above-mentioned conventional problems are solved.

In order to achieve the above object, the present inventors made intensive studies, and as a result, they surprisingly found that 3-chloro-N-(3-chloro-5-trifluoromethyl-2-pyridyl)-alpha,alpha,alpha-trifluoro-2,6-dinit ro-p-toluidine has a control effect on soft rot when it is applied to plant cultivation soil, although it does not have a bactericidal effect even if it is directly applied to Erwinia carotovora.

The control agent for soft rot of a plant of the invention has been achieved on the basis of the above finding, and the invention relates to the use of a control agent for soft rot of a plant, the control agent containing 3-chloro-N-(3-chloro-5-trifluoromethyl-2-pyridyl)-alpha,alpha,alpha-trifluoro-2,6-dinitro-p-toluidine as an active ingredient. This use of the control agent also includes the use of the above-mentioned control agent for soft rot, wherein the control agent is a control agent to be applied to plant cultivation soil.

Further, the invention relates to a control method for soft rot of a plant, comprising applying an effective amount of 3-chloro-N-(3-chloro-5-trifluoromethyl-2-pyridyl)-alpha,alpha,alpha-trifluoro-2,6-dinit ro-p-toluidine to plant cultivation soil. This method includes a control method for soft rot of a plant, comprising applying an effective amount of 3-chloro-N-(3-chloro-5-trifluoromethyl-2-pyridyl)-alpha,alpha,alpha-trifluoro-2,6-dinit ro-p-toluidine to plant cultivation soil, and thereafter sowing seeds of a plant or planting seedlings of a plant therein; and a control method for soft rot of a plant, comprising applying an effective amount of 3-chloro-N-(3-chloro-5-trifluoromethyl-2-pyridyl)-alpha,alpha,alpha-trifluoro-2,6-dinit ro-p-toluidine onto a surface of the cultivation soil without mixing in the cultivation soil. Further, these control methods for soft rot of a plant also include a method wherein, in the above-mentioned control methods for soft rot of a plant, an amount of 3-chloro-N-(3-chloro-5-trifluoromethyl-2-pyridyl)-alpha,alpha,alpha-trifluoro-2,6-dinit ro-p-toluidine applied to the cultivation soil is from 0.025 to 2.5 g/m$^2$.

Further, the invention includes the use of control agents for soft rot of a plant and control methods for the same, wherein, in the above-mentioned control agent for soft rot of a plant and control method for the same, the plant is a vegetable, and the vegetable is at least one kind selected from the group consisting of asparagus, endive, calla, cauliflower, cabbage, amorphophallus konjac, Brassica campestris, celery, Japanese radish, tobacco, onion, qing-geng-cai, tomato, eggplant, carrot, green onion, Chinese cabbage, Brassica oleracea x Brassica campestris, parsley, potato, broccoli, rakkyo, lettuce, wasabi, and oil-seed rape.

According to the invention, by using 3-chloro-N-(3-chloro-5-trifluoromethyl-2-pyridyl)-alpha,alpha,alpha-trifluoro-2,6-dinit ro-p-toluidine as a control agent for soft rot of a plant and applying the compound to plant cultivation soil, a superior control effect on soft rot is exhibited as compared with the conventional methods. Further, by applying the compound onto a surface of the cultivation soil without mixing in the cultivation soil, the concentration of the compound on the surface of the cultivation soil is increased, and therefore, the control effect on soft rot of a plant is more effectively exhibited.

In the use of the control agent for soft rot of a plant and the control method for the same according to the invention, 3-chloro-N-(3-chloro-5-trifluoromethyl-2-pyridyl)-alpha,alpha,alpha-trifluoro-2,6-dinit ro-p-toluidine is used as an active ingredient, and the compound is a compound having a control activity against soft rot of a plant.

The control agent for soft rot of a plant used according to the invention can be formulated into preparations in various formulations such as an emulsifiable concentrate, a dust formulation, a wettable powder, a liquid formulation, a granule, and a suspension-concentrate by blending various auxiliary agents to

3-chloro-N-(3-chloro-5-trifluoromethyl-2-pyridyl)-alpha,alpha,alpha-trifluoro-2,6-dinit ro-p-toluidine, which is an active ingredient, according to a common production method for an agricultural chemical. At this time, 3-chloro-N-(3-chloro-5-trifluoromethyl-2-pyridyl)-alpha,alpha,alpha-trifluoro-2,6-dinit ro-p-toluidine and the above-mentioned auxiliary agents may be mixed all together and formulated into a preparation, or they may be separately formulated into different preparations and the resulting preparations may be mixed with each other. Examples of the auxiliary agents as used herein include a carrier, an emulsifying agent, a suspending agent, a thickening agent, a stabilizing agent, a dispersing agent, a spreading agent, a wetting agent, a penetrating agent, an antifreezing agent, an antifoaming agent, and these may be added appropriately as needed.

The carrier is classified into a solid carrier and a liquid carrier, and examples of the solid carrier include animal and plant powders such as starch, sugar, cellulose powder, cyclodextrin, activated carbon, soybean powder, wheat powder, rice husk powder, wood powder, fish powder, and milk powder; mineral powders such as talc, kaolin, bentonite, organic bentonite, calcium carbonate, calcium sulfate, sodium bicarbonate, zeolite, diatomaceous earth, white carbon, clay, alumina, silica, sulfur powder, and slaked lime; and the like. Examples of the liquid carrier include water; plant oils such as soybean oil and cotton seed oil; animal oils such as beef tallow and whale oil; alcohols such as ethyl alcohol and ethylene glycol; ketones such as acetone, methyl ethyl ketone, methyl isobutyl ketone, and isophorone; ethers such as dioxane and tetrahydrofuran; aliphatic hydrocarbons such as kerosene, lamp oil, liquid paraffin, and cyclohexane; aromatic hydrocarbons such as toluene, xylene, trimethylbenzene, tetramethylbenzene, and solvent naphtha; halogenated hydrocarbons such as chloroform and chlorobenzene; acid amides such as N,N-dimethylformamide; esters such as ethyl acetate ester and fatty acid glycerol ester; nitriles such as acetonitrile and sulfur-containing compounds such as dimethyl sulfoxide; N-methyl-2-pyrrolidone.

As the emulsifying agent, various emulsifying agents are used, and examples thereof include nonionic surfactants and anionic surfactants capable of functioning as an emulsifying agent.

Examples of the suspending agent include Veegum R (trade name, manufactured by Sanyo Chemical Industries, Ltd.).

Examples of the thickening agent include inorganic particles such as carbonates, silicates, oxides and organic substances such as urea-formaldehyde condensates.

Examples of the stabilizing agent include epoxidized animal and plant oils, nonionic polyoxyethylene surfactants, anionic polyoxyethylene surfactants, polyhydric alcohols and basic substances.

Examples of the dispersing agent include anionic surfactants such as naphthalene sulfonate salts, naphthalene sulfonate-formalin condensate salts, alkyl naphthalene sulfonate salts, alkyl naphthalene sulfonate-formalin condensate salts, phenol sulfonate salts, phenol sulfonate-formalin condensate salts, lignin sulfonate salts, polycarboxylate salts, polyoxyethylene alkyl ether sulfate ester salts, polyoxyethylene alkyl aryl ether sulfate salts, polyoxyethylene alkyl ether sulfate ester salts, polyoxyethylene alkyl ether phosphate salts, and polyoxyethylene alkyl aryl ether phosphate ester salts; nonionic surfactants such as oxyalkylene block polymers, polyoxyethylene alkyl ethers, polyoxyethylene alkyl aryl ethers, polyoxyethylene styryl aryl ethers, polyoxyethylene glycol alkyl ethers, polyoxyethylene hydrogenated castor oil, and polyoxyethylene castor oil.

Examples of the spreading agent include sodium alkyl sulfates, sodium alkylbenzene sulfonates, sodium lignin sulfonates, polyoxyethylene glycol alkyl ethers, polyoxyethylene lauryl ethers, polyoxyethylene alkyl aryl ethers and polyoxyethylene sorbitan fatty acid sters.

Examples of the wetting agent include cationic, anionic, amphoteric, and nonionic surfactants as well known in this technical field.

Examples of the penetrating agent include fatty alcohol alkoxylates, mineral oils, plant oils, esters of mineral oils or plant oils.

Examples of the antifreezing agent include ethylene glycol, propylene glycol, and the like.

Examples of the antifoaming agent include Rhodorsil 432 (trade name, manufactured by Rhodia Nicca Ltd.), Anti-mousse (trade name, manufactured by BELCHIM CROP PROTECTION).

The blending ratio of the above-mentioned 3-chloro-N-(3-chloro-5-trifluoromethyl-2-pyridyl)-alpha,alpha,alpha-trifluoro-2,6-dinit ro-p-toluidine to the various auxiliary agents is from 1 : 100000 to 100000 : 1, preferably from 1 : 1000 to 1000 : 1 in terms of weight ratio. When such a preparation product is actually used, the preparation product is used as such or can be used by diluting it with a diluent such as water to a given concentration.

Further, the control agent for soft rot can be used in admixture or in combination with another agricultural chemical, a fertilizer or an agent for reducing phytotoxicity and by doing this, a further superior effect or action may be exhibited in some cases. Examples of another agricultural chemical include a herbicide, a fungicide, an antibiotic, a plant hormone, an insecticide, a miticide, a nematicide, and a soil insecticide. Incidentally, in the case where there are salts, alkyl esters, hydrates, different crystalline forms, various structural isomers, and the like of such an agricultural chemical even if it is not specifically mentioned, it is a matter of course that these are also included in the scope of the invention.

Examples of the active ingredient of the herbicide include the following compounds (common names, including some which are under application for ISO).

(1) Those believed to exhibit a herbicidal effect by disturbing hormone activities of plants, including phenoxy compounds such as 2,4-D, 2,4-D-butotyl, 2,4-D-butyl, 2,4-D-dimethylammonimum, 2,4-D-diolamine, 2,4-D-ethyl, 2,4-D-2-ethylhexyl, 2,4-D-isobutyl, 2,4-D-isoctyl, 2,4-D-isopropyl, 2,4-D-isopropylammonium, 2,4-D-sodium, 2,4-D-isopropanolammonium, 2,4-D-trolamine, 2,4-DB, 2,4-DB-butyl, 2,4-DB-dimethylammonium, 2,4-DB-isoctyl, 2,4-DB-potassium, 2,4-DB-sodium, dichlorprop, dichlorprop-butotyl, dichlorprop-dimethylammonium, dichlorpropisoctyl, dichlorprop-potassium, dichlorprop-P, dichlorprop-P-dimethylammonium, dichlorprop-P-potassium, dichlorprop-P-sodium, MCPA, MCPA-butotyl, MCPA-dimethylammonium, MCPA-2-ethylhexyl, MCPA-potassium, MCPA-sodium, MCPA-thioethyl, MCPB, MCPB-ethyl, MCPB-sodium, mecoprop, mecoprop-butotyl, mecoprop-sodium, mecoprop-P, mecoprop-P-butotyl, mecoprop-P-dimethylammonium, mecoprop-P-2-ethylhexyl, mecoprop-P-potassium, naproanilide, and clomeprop; aromatic carboxylic acid compounds such as 2,3,6-TBA, dicamba, dicamba-butotyl, dicamba-diglycolamine, dicamba-dimethylammonium, dicamba-diolamine, dicamba-isopropylammonium, dicamba-potassium, dicambasodium, dichlobenil, picloram, picloram-dimethylammonium, picloram-isoctyl, picloram-potassium, picloram-triisopropanolammonium, picloram-triisopropylammonium, picloram-trolamine, triclopyr, triclopyr-butotyl, triclopyrtriethylammonium, clopyralid, clopyralid-olamine, clopyralid-potassium, clopyralidtriisopropanolammonium, and aminopyralid; and others, for example, naptalam, naptalam-sodium, benazolin, benazolin-ethyl, quinclorac, quinmerac, diflufenzopyr, diflufenzopyr-sodium, fluoroxypyr, fluoroxypyr-2-butoxy-1-methylethyl, fluoroxypyrmeptyl, chlorflurenol, and chlorflurenol-methyl.

(2) Those believed to exhibit a herbicidal effect by inhibiting photosynthesis of plants, including urea compounds such as chlorotoluron, diuron, fluometuron, linuron, isoproturon, metobenzuron, tebuthiuron, dimefuron, isouron, karbutilate, methabenzthiazuron, metoxuron, monolinuron, neburon, siduron, terbumeton, and trietazine; triazine compounds such as simazine, atrazine, atratone, simetryn, prometryn, dimethametryn, hexazinone, metribuzin, terbuthylazine, cyanazine, ametryn, cybutryne, triaziflam, terbutryn, propazine, metamitron, prometon, and indaziflam; uracil compounds such as bromacil, bromacyl-lithium, lenacil, and terbacil; anilide compounds such as propanil and cypromid; carbamate compounds such as swep, desmedipham, and phenmedipham; hydroxybenzonitrile compounds such as bromoxynil, bromoxynil-octanoate, bromoxynil-heptanoate, ioxynil, ioxynil-octanoate, ioxynil-potassium, and ioxynil-sodium; and others, for example, pyridate, bentazone, bentazone-sodium, amicarbazone, methazole and pentanochlor.

(3) Those believed to convert to a free radical by itself in the plant body to generate active oxygen, thereby exhibiting a rapid herbicidal effect, including quaternary ammonium salt compounds such as paraquat and diquat.

(4) Those believed to exhibit a herbicidal effect by inhibiting chlorophyll biosynthesis of plants and abnormally accumulating a photosensitizing peroxide substance in the plant body, including diphenylether compounds such as nitrofen, chlomethoxyfen, bifenox, acifluorfen, acifluorfen-sodium, fomesafen, fomesafen-sodium, oxyfluorfen, lactofen, aclonifen, ethoxyfen-ethyl (HC-252), fluoroglycofen-ethyl, and fluoroglycofen; cyclic imide compounds such as chlorphthalim, flumioxazin, flumiclorac, flumiclorac-pentyl, cinidon-ethyl, and fluthiacet-methyl; and others, for example, oxadiargyl, oxadiazon, sulfentrazone, carfentrazone-ethyl, thidiazimin, pentoxazone, azafenidin, isopropazole, pyraflufen-ethyl, benzfendizone, butafenacil, saflufenacil, flupoxam, fluazolate, profluazol, pyraclonil, flufenpyr-ethyl, and bencarbazone.

(5) Those believed to exhibit a herbicidal effect characterized by bleaching activities by inhibiting chromogenesis of plants such as carotenoids, including pyridazinone compounds such as norflurazon, chloridazon, and metflurazon; pyrazole compounds such as pyrazolynate, pyrazoxyfen, benzofenap, topramezone (BAS-670H), and pyrasulfotole; and others, for example, amitrole, fluridone, flurtamone, diflufenican, methoxyphenone, clomazone, sulcotrione, mesotrione, tembotrione, tefuryltrione (AVH-301), isoxaflutole, difenzoquat, difenzoquat-metilsulfate, isoxachlortole, benzobicyclon, picolinafen, and beflubutamid.

(6) Those exhibiting a strong herbicidal effect specifically to gramineous plants, including aryloxyphenoxypropionic acid compounds such as diclofop-methyl, diclofop, pyriphenop-sodium, fluazifop-butyl, fluazifop, fluazifop-P, fluazifop-P-butyl, haloxyfop-methyl, haloxyfop, haloxyfop-etotyl, haloxyfop-P, haloxyfop-P-methyl, quizalofop-ethyl, quizalofop-P, quizalofop-P-ethyl, quizalofop-P-tefuryl, cyhalofopbutyl, fenoxaprop-ethyl, fenoxaprop-P, fenoxaprop-P-ethyl, metamifop-propyl, metamifop, clodinafop-propargyl, clodinafop, and propaquizafop; cyclohexanedione compounds such as alloxydim-sodium, alloxydim, clethodim, sethoxydim, tralkoxydim, butroxydim, tepraloxydim, profoxydim, and cycloxydim; and others, for example, flamprop-M-methyl, flamprop-M and flamprop-M-isopropyl.

(7) Those believed to exhibit a herbicidal effect by inhibiting an amino acid biosynthesis of plants, including sulfonylurea compounds such as chlorimuron-ethyl, chlorimuron, sulfometuron-methyl, sulfometuron, primisulfuron-methyl, primisulfuron, bensulfuron-methyl, bensulfuron, chlorsulfuron, metsulfuron-methyl, metsulfuron, cinosulfuron, pyrazosulfuron-ethyl, pyrazosulfuron, azimsulfuron, flazasulfuron, rimsulfuron, nicosulfuron, imazosulfuron, cyclosulfamuron, prosulfuron, flupyrsulfuron-methyl-sodium, flupyrsulfuron, triflusulfuron-methyl, triflusulfuron, halosulfuron-methyl, halosulfuron, thifensulfuron-methyl, thifensulfuron, ethoxysulfuron, oxasulfuron, ethametsulfuron, ethametsulfuron-methyl, iodosulfuron, iodosulfuron-methyl-sodium, sulfosulfuron, triasulfuron, tribenuron-methyl, tribenuron, tritosulfuron, foramsulfuron, trifloxysulfuron, trifloxysulfuron-sodium, mesosulfuronmethyl, mesosulfuron, orthosulfamuron, flucetosulfuron, amidosulfuron, propyrisulfuron (TH-547), NC-620, and compounds disclosed in WO 2005/092104; triazolopyrimidinesulfonamide compounds such as flumetsulam, metosulam, diclosulam, cloransulam-methyl, florasulam, penoxsulam, and pyroxsulam; imidazolinone compounds such as imazapyr, imazapyr-isopropylammonium, imazethapyr, imazethapyr-ammonium, imazaquin, imazaquin-ammonium, imazamox, imazamoxammonium, imazamethabenz, imazamethabenz-methyl, and imazapic; pyrimidinylsalicylic acid compounds such as pyrithiobac-sodium, bispyribac-sodium, pyriminobac-methyl, pyribenzoxim, pyriftalid, and pyrimisulfan (KUH-021); sulfonylaminocarbonyltriazolinone compounds such as flucarbazone, flucarbazone-sodium, propoxycarbazone-sodium, and propoxycarbazone; and others, for example, glyphosate, glyphosate-sodium, glyphosate-potassium, glyphosate-ammonium, glyphosate-diammonium, glyphosate-isopropylammonium, glyphosate-trimesium, glyphosate-sesquisodium, glufosinate, glufosinate-ammonium, glufosinate-P, glufosinate-P-ammonium, glufosinate-P-sodium, bilanafos, bilanafos-sodium, and cinmethylin.

(8) Those believed to exhibit a herbicidal effect by inhibiting cell mitoses of plants, including dinitroaniline compounds such as trifluralin, oryzalin, nitralin, pendimethalin, ethalfluralin, benfluralin, prodiamine, butralin, and dinitramine; amide compounds such as bensulide, napropamide, propyzamide, and pronamide; organic phosphorus compounds such as amiprofos-methyl, butamifos, anilofos, and piperophos; phenyl carbamate compounds such as propham, chlorpropham, barban, and carbetamide; cumylamine compounds such as daimuron, cumyluron, bromobutide, and methyldymron; and others, for example, asulam, asulam-sodium, dithiopyr, thiazopyr, chlorthal-dimethyl, chlorthal, and diphenamid.

(9) Those believed to exhibit a herbicidal effect by inhibiting protein biosynthesis or lipid biosynthesis of plants, including chloroacetamide compounds such as alachlor, metazachlor, butachlor, pretilachlor, metolachlor, S-metolachlor, thenylchlor, pethoxamid, acetochlor, propachlor, dimethenamid, dimethenamid-P, propisochloror, and dimethachlor; thiocarbamate compounds such as molinate, dimepiperate, pyributicarb, EPTC, butylate, vernolate, pebulate, cycloate, prosulfocarb, esprocarb, thiobencarb, diallate, tri-allate, and orbencarb; and others, for example, etobenzanid, mefenacet, flufenacet, tridiphane, cafenstrole, fentrazamide, oxaziclomefone, indanofan, benfuresate, pyroxasulfone (KIH-485), dalapon, dalapon-sodium, TCA-sodium, and trichloroacetic acid.

(10) Those believed to exhibit a herbicidal effect by being parasitic on plants, including Xanthomonas campestris, Epicoccosirus nematosorus, Epicoccosirus nematosperus, Exserohilum monoseras, and Drechsrela monoceras.

(11) Those believed to exhibit a herbicidal effect and not listed in (1) to (10), including MSMA, DSMA, CMA, endothall, endothall-dipotassium, endothall-sodium, endothallmono(N,N-dimethylalkylammonium), ethofumesate, sodium chlorate, pelargonic acid, nonanoic acid, fosamine, fosamine-ammonium, pinoxaden, ipfencarbazone (HOK-201), aclolein, ammonium sulfamate, borax, chloroacetic acid, sodium chloroacete, cyanamide, methylarsonic acid, dimethylarsinic acid, sodium dimethylarsinate, dinoterb, dinoterb-ammonium, dinoterb-diolamine, dinoterb-acetate, DNOC, ferrous sulfate, flupropanate, flupropanate-sodium, isoxaben, mefluidide, mefluididediolamine, metam, metam-ammonium, metam-potassium, metam-sodium, methyl isothiocyanate, pentachlorophenol, sodium pentachlorophenoxide, pentachlorophenol laurate, quinoclamine, sulfuric acid and urea sulfate.

Examples of the active ingredient compound (common names, including some which are under application or the test code of the Japan Plant Protection Association) of the fungicide include anilinopyrimidinamine compounds such as mepanipyrim, pyrimethanil , cyprodinil, and ferimzone; triazolopyrimidine compounds such as 5-chloro-6-(2,4,6-trifluorophenyl)-7-(4-methylpiperidin-1-yl)[1,2,4]triazolo[1,5-a]pyrimidine; azole compounds such as triadimefon, bitertanol, triflumizole, etaconazole, propiconazole, penconazole, flusilazole, myclobutanil, cyproconazole, tebuconazole, hexaconazole, furconazole-cis, prochloraz, metconazole, epoxiconazole, tetraconazole, oxpoconazole fumarate, sipconazole, prothioconazole, triadimenol, flutriafol, difenoconazole, fluquinconazole, fenbuconazole, bromuconazole, diniconazole, tricyclazole, probenazole, simeconazole, pefurazoate, ipconazole, and imibenconazole; quinoxaline compounds such as quinomethionate; dithiocarbamate compounds such as maneb, zineb, mancozeb, polycarbamate, metiram, propineb, and thiram; organic chlorine compounds such as fthalide, chlorothalonil and quintozene; imidazole compounds such as benomyl, thiophanate-methyl, carbendazim, thiabendazole, fuberiazole, and cyazofamid; cyano acetamide compounds such as cymoxanil; phenylamide compounds such as metalaxyl, metalaxyl-M, mefenoxam, oxadixyl, ofurace, benalaxyl, benalaxyl-M (another name; kiralaxyl or chiralaxyl), furalaxyl, and cyprofuram; sulfenic acid compounds such as dichlofluanid; copper compounds, including inorganic copper compounds such as cupric hydroxide and organic copper compounds such as oxine copper; an isoxazole compound such as hymexazol; organic phosphorus compounds such as fosetyl-Al, tolclofos-methyl, S-benzyl O,O-diisopropylphosphorothioate, O-ethyl S,S-diphenylphosphorodithioate, aluminum ethylhydrogen phosphonate, edifenphos, and iprobenfos; N-halogenothioalkyl compounds such as captan, captafol, and folpet; dicarboxyimide compounds such as procymidone, iprodione, and vinclozolin; benzanilide compounds such as flutolanil, mepronil, zoxamide, and tiadinil; anilide compounds such as carboxin, oxycarboxin, thifluzamide, penthiopyrad, boscalid, bixafen, fluopyram, isotianil, and a mixture of 3-(difluoromethyl)-1-methyl-N-[(1RS,4SR,9RS)-1,2,3,4-tetrahydro-9-isopropyl-1,4-me thanonaphthalen-5-yl]pyrazole-4-carboxamide and 3-(difluoromethyl)-1-methyl-N-[(1RS,4SR,9SR)-1,2,3,4-tetrahydro-9-isopropyl-1,4-me thanonaphthalen-5-yl]pyrazole-4-carboxamide (isopyrazam); piperazine compounds such as triforine; pyridine compounds such as pyrifenox; carbinol compounds such as fenarimol and flutriafol; piperidine compounds such as fenpropidine; morpholine compounds such as fenpropimorph, spiroxamine, and tridemorph; organotin compounds such as fentin hydroxide and fentin acetate; urea compounds such as pencycuron; cinnamic acid compounds such as dimethomorph and flumorph; phenylcarbamate compounds such as diethofencarb; cyanopyrrole compounds such as fludioxonil and fenpiclonil; strobilurin compounds such as azoxystrobin, kresoximmethyl, metominofen, trifloxystrobin, picoxystrobin, oryzastrobin, dimoxystrobin, pyraclostrobin, and fluoxastrobin; oxazolidinone compounds such as famoxadone; thiazolecarboxamide compounds such as ethaboxam; silylamide compounds such as silthiopham; amino acid amide carbamate compounds such as iprovalicarb, benthiavalicarb-isopropyl and methyl N-(isopropoxycarbonyl)-L-valyl-(3RS)-3-(4-chlorophenyl)-beta-alaninate(valiphenalate); imidazolidine compounds such as fenamidone; hydroxyanilide compounds such as fenhexamid; benzenesulfonamide compounds such as flusulfamide; oxime ether compounds such as cyflufenamid; phenoxyamide compounds such as fenoxanil; anthraquinone compounds; crotonic acid compounds; guanidine compounds such as iminoctadine and dodine; 4-quinolionol derivative compounds such as 2,3-dimethyl-6-t-butyl-8-fluoro-4-acetylquinoline; cyanomethylene compounds such as 2-(2-fluoro-5-(trifluromethyl)phenylthio)-2-(3-(2-methoxyphenyl)thiazolidin-2-yliden) acetonitrile; other compounds such as pyribencarb, isoprothiolane, pyroquilon, diclomezine, quinoxyfen, propamocarb hydrochloride, chloropicrin, dazomet, metam-sodium, nicobifen, metrafenone, UBF-307, diclocymet, proquinazid, amisulbrom (another name: amibromdole), mandipropamid, fluopicolide, carpropamid, meptyldinocap, 6-t-butyl-8-fluoro-2,3-dimethylquinolin-4-yl acetate, BCF-051, BCM-061, and BCM-062.

Examples of the antibiotic include streptomycin, validamycin, kasugamycin, polyoxins, avermectin, emamectin benzoate, milbemectin, milbemycin, spinosad, ivermectin, lepimectin, DE-175, abamectin, emamectin, and spinetoram.

Examples of the plant hormone include auxin, gibberellin, cytokinin, abscisic acid, ethylene, brassinosteroid, jasmonic acid, florigen, strigolactone, and salicylic acid.

Examples of the active ingredient compound (common names, including some which are under application or the test code) of the insecticide, miticide, nematicide, or soil insecticide include organic phosphate ester compounds such as profenofos, dichlorvos, fenamiphos, fenitrothion, EPN, diazinon, chlorpyrifos, chlorpyrifos-methyl, acephate, prothiofos, fosthiazate, cadusafos, dislufoton, isoxathion, isofenphos, ethion, etrimfos, quinalphos, dimethylvinphos, dimethoate, sulprofos, thiometon, vamidothion, pyraclofos, pyridaphenthion, pirimiphos-methyl, propaphos, phosalone, formothion, malathion, tetrachlovinphos, chlorfenvinphos, cyanophos, trichlorfon, methidathion, phenthoate, ESP, azinphos-methyl, fenthion, heptenophos, methoxychlor, parathion, phosphocarb, demeton-S-methyl, monocrotophos, methamidophos, imicyafos, parathion-methyl, terbufos, phosphamidon, phosmet, and phorate; carbamate compounds such as carbaryl, propoxur, aldicarb, carbofuran, thiodicarb, methomyl, oxamyl, ethiofencarb, pirimicarb, fenobucarb, carbosulfan, benfuracarb, bendiocarb, furathiocarb, isoprocarb, metolcarb, xylylcarb, XMC, and fenothiocarb; nereistoxin derivatives such as cartap, thiocyclam, bensultap, and thiosultap-sodium; organic chlorine compounds such as dicofol, tetradifon, endosulufan, dienochlor, and dieldrin; organic metal compounds such as fenbutatin oxide and cyhexatin; pyrethroid compounds such as fenvalerate, permethrin, cypermethrin, deltamethrin, cyhalothrin, tefluthrin, ethofenprox, flufenprox, cyfluthrin, fenpropathrin, flucythrinate, fluvalinate, cycloprothrin, lambda-cyhalothrin, pyrethrins, esfenvalerate, tetramethrin, resmethrin, protrifenbute, bifenthrin, zeta-cypermethrin, acrinathrin, alpha-cypermethrin, allethrin, gamma-cyhalothrin, theta-cypermethrin, tau-fluvalinate, tralomethrin, profluthrin, beta-cypermethrin, beta-cyfluthrin, metofluthrin, phenothrin, imidate, and flumethrin; benzoylurea compounds such as diflubenzuron, chlorfluazuron, teflubenzuron, flufenoxuron, lufenuron, novaluron, triflumuron, hexaflumuron, bistrifluron, noviflumuron, and fluazuron; juvenile hormone-like compounds such as methoprene, pyriproxyfen, fenoxycarb, and diofenolan; pyridazinone compounds such as pridaben; pyrazole compounds such as fenpyroximate, fipronil, tebufenpyrad, ethiprole, tolfenpyrad, acetoprole, pyrafluprole, and pyriprole; neonicotinoids such as imidacloprid, nitenpyram, acetamiprid, thiacloprid, thiamethoxam, clothianidin, nidinotefuran, and dinotefuran; hydrazine compounds such as tebufenozide, methoxyfenozide, chromafenozide, and halofenozide; pyridine compounds such as pyridaryl and flonicamid; tetronic acid compounds such as spirodiclofen; strobilurin compounds such as fluacrypyrim; pyridinamine compounds such as flufenerim; dinitro compounds; organic sulfur compounds; urea compounds; triazine compounds; hydrazone compounds; and other compounds, for example, buprofezin, hexythiazox, amitraz, chlordimeform, silafluofen, triazamate, pymetrozine, pyrimidifen, chlorfenapyr, indoxacarb, acequinocyl, etoxazole, cyromazine, 1,3-dichloropropene, diafenthiuron, benclothiaz, bifenazate, spiromesifen, spirotetramat, propargite, clofentezine, metaflumizone, flubendiamide, cyflumetofen, chlorantraniliprole, cyenopyrafen, pyrifluquinazone, fenazaquin, pyridaben, amidoflumet, chlorobenzoate, sulfluramid, hydramethylnon, metaldehyde, HGW-86, ryanodine, flufenrim, pyridalyl, spirodiclofen, verbutin, thiazolylcinnanonitrile, amidoflumet, AKD-1022, and IKA-2000. Further, microbial agricultural chemicals such as crystalline protein toxins produced by Bacillus thuringiensis aizawai, Bacillus thuringiensis kurstaki, Bacillus thuringiensis israelensis, Bacillus thuringiensis japonensis, Bacillus thuringiensis tenebrionis, or Bacillus thuringiensis; entomopathogenic viral agents, entomopathogenic fungal agents, and nematopathogenic fungal agents; natural substances such as azadirachtin and rotenone and repellents such as deet can be mentioned.

Examples of the fertilizer include a liquid fertilizer, a vitalizing agent, an activating agent and a foliar liquid fertilizer.

Examples of the agent for reducing phytotoxicity include a calcium carbonate agent.

Incidentally, the blending ratio of 3-chloro-N-(3-chloro-5-trifluoromethyl-2-pyridyl)-alpha,alpha,alpha-trifluoro-2,6-dinit ro-p-toluidine to the above-mentioned another agricultural chemical is from 1 : 10000 to 10000 : 1, preferably from 1 : 1000 to 1000 : 1 in terms of weight ratio.

Further, the blending ratio of 3-chloro-N-(3-chloro-5-trifluoromethyl-2-pyridyl)-alpha,alpha,alpha-trifluoro-2,6-dinit ro-p-toluidine to the fertilizer is from 1 : 100000 to 100000 : 1, preferably from 1 : 1000 to 1000 : 1 in terms of weight ratio.

Further, the blending ratio of 3-chloro-N-(3-chloro-5-trifluoromethyl-2-pyridyl)-alpha,alpha,alpha-trifluoro-2,6-dinit ro-p-toluidine to the agent for reducing phytotoxicity is from 1 : 100000 to 100000 : 1, preferably from 1 : 1000 to 1000 : 1 in terms of weight ratio.

The above-mentioned another agricultural chemical, fertilizer, agent for reducing phytotoxicity, can be used alone or by mixing two or more kinds thereof.

Further, 3-chloro-N-(3-chloro-5-trifluoromethyl-2-pyridyl)-alpha,alpha,alpha-trifluoro-2,6-dinit ro-p-toluidine and another agricultural chemical, a fertilizer and an agent for reducing phytotoxicity, may be used by separately formulating them into different preparations and mixing the resulting preparations immediately before use, or may be used by formulating them all together into a preparation.

Subsequently, application of 3-chloro-N-(3-chloro-5-trifluoromethyl-2-pyridyl)-alpha,alpha,alpha-trifluoro-2,6-dinit ro-p-toluidine which is the control agent for soft rot used in the invention to cultivation soil will be described. Embodiments of the respective application methods are, for example, as follows.

1. The control agent is applied to plant cultivation soil, a mulch-sheet for agricultural use is spread on the soil, and thereafter, sowing of seeds of a plant or planting of seedlings of a plant is performed through planting holes of the mulch-sheet for agricultural use.

2. A mulch-sheet for agricultural use is spread on plant cultivation soil, a planting holes for sowing of seeds of a plant or planting of seedlings of a plant are bored into the mulch-sheet, and then, the control agent is applied to the mulch-sheet for agricultural use, and thereafter, sowing of seeds of a plant or planting of seedlings of a plant is performed through the planting holes.

3. After sowing of seeds of a plant or planting of seedlings of a plant is performed, the control agent is applied to cultivation soil.

4. After the control agent is applied to plant cultivation soil, sowing of seeds of a plant or planting of seedlings of a plant is performed. It is preferred that in the control methods described in the above items 1 to 4, the control agent is applied onto a surface of the cultivation soil. It is more preferred that in the control methods described in the above items 1 to 4, the control agent is applied onto a surface of the cultivation soil without mixing in the cultivation soil.

As for the application of the control agent for soft rot of the invention to the soil, by using an appropriate apparatus such as a watering pot, a sprayer, a hand-operated granule applicator, an electric-powered granule applicator, or a powder applicator, for example, spraying, nebulizing, misting, atomizing, granule applying, or the like can be performed. Further, the control agent is sprayed onto soil in a cell tray, and planting of seedlings may be performed together with the soil in the cell.

Before and after the application of the control agent for soft rot of the invention to soil, a common mulch-sheet for agricultural use such as a mulch-film, a functional mulch-film, a polyethylene film for agricultural use, or a biodegradable plastic mulch-film can be used.

In the control method for soft rot of the invention, 3-chloro-N-(3-chloro-5-trifluoromethyl-2-pyridyl)-alpha,alpha,alpha-trifluoro-2,6-dinit ro-p-toluidine is applied to cultivation soil in an amount of from 0.025 to 2.5 $g/m^2$, preferably from 0.05 to 1 $g/m^2$, more preferably from 0.1 to 0.5 $g/m^2$. The application amount thereof to cultivation soil can be suitably changed depending on the form of the preparation, the application method thereof, the plant to be a target for application, the application time or place, the state of occurrence of soft rot.

In the invention, examples of the plant to be a target for controlling soft rot include vegetables . Examples of the vegetables include asparagus, endive, calla, cauliflower, cabbage, amorphophallus konjac, Brassica campestris, celery, Japanese radish, tobacco, onion, qing-geng-cai, tomato, eggplant, carrot, green onion, Chinese cabbage, Brassica oleracea x Brassica campestris, parsley, potato, broccoli, rakkyo, lettuce, wasabi and oil-seed rape.

**Examples**

Hereinafter, Examples of the invention will be described together with Comparative examples. However, the invention is not limited to only these Examples.

Example 1

(1) Preparation of spray solution

Preparation was performed using 500 g/L of 3-chloro-N-(3-chloro-5-trifluoromethyl-2-pyridyl)-alpha,alpha,alpha-trifluoro-2,6-dinit ro-p-toluidine (fluazinam (common name), Frowncide SC (trade name), manufactured by Ishihara Sangyo Kaisha, Ltd.) such that the amount of the active ingredient was 250 g ai/10 a (500 mL product/10 a), and the amount of dilution water was 150 L/10 a.

(2) Test for disease control of Chinese cabbage

The spray solution prepared in the above was sprayed onto cultivation soil in a field such that the spraying amount was 0.25 g/m$^2$ (150 L/10 a), and thereafter, a mulch-sheet for agricultural use was spreaded on the soil. After planting holes for settlement (diameter: about 5 cm) were made, seedlings of Chinese cabbage (cultivar: Musou) grown for 4 weeks in a cell tray (128 holes/nursery box) were planted such that 30 seedlings were planted in one test plot having an area of 6 m$^2$ with three replications.

Comparative example 1

(1) Preparation of spray solution

Preparation was performed by diluting streptomycin (Mycin 20 wettable powder (trade name), manufactured by Hokko Chemical Industry Co., Ltd.) with water to 1/1000.

(2) Test for disease control of Chinese cabbage

In a field covered with a mulch-sheet for agricultural use, seedlings of Chinese cabbage (cultivar: Musou) grown in a cell tray were planted, in the same manner as in Example 1, and foliage application was performed by spraying the spray solution of streptomycin prepared in (1) (spraying amount per application: 200 L/10 a) twice (39 days and 47 days after the planting of the seedlings).

The degree of disease incidence was examined for all the plants in each test plot 63 days after the start of the test, and the disease incidence rate, the disease severity, and the disease control value were calculated according to the following equations, and the test results are shown in Table 1.

$$(\text{Disease incidence rate}) = [(\text{number of diseased plants}) / (\text{number of plants examined})] * 100$$

$$(\text{Disease severity}) = \{S[(\text{number of diseased plants in each class into which the plants are classified according to the degree of disease}) * (\text{disease index})] / [(\text{number of plants examined}) * 4]\} * 100$$

$$\text{(Disease control value)} = \{1 - [\text{(Disease severity in treated plot)} / \text{(Disease severity in untreated plot)}]\} * 100$$

Incidentally, the evaluation criteria for the disease index are as follows.

(Disease index)

0: No lesion
1: Lesions appear only in part of outer leaves (shipment can be made).
2: Lesions appear in outer leaves and part of head leaves (the damaged part is removed and shipment as a small size plant can be made, rated Grade B).
3: Lesions appear in most head leaves or more (shipment cannot be made).
4: Lesions appear in the entire plant and the plant dies.

[Table 1]

| Active ingredient | Amount of active ingredient or dilution ratio | Replication | Number of plants examined | Disease incidence rate | Disease severity | Disease control value |
|---|---|---|---|---|---|---|
| Fluazinam | 250 g ai/10 a 150 L/10 a | I | 30 | 16.7 | 5.0 | 81.7 |
| | | II | 30 | 13.3 | 8.3 | |
| | | III | 30 | 10.0 | 5.8 | |
| | | Average | 30 | 13.3 | 6.4 | |
| Streptomycin | 1/1000 | I | 30 | 33.3 | 15.0 | 0 |
| | | II | 30 | 100 | 75.0 | |
| | | III | 30 | 46.7 | 23.3 | |
| | | Average | 30 | 60.0 | 37.8 | |
| Untreated plot | | I | 30 | 23.3 | 9.2 | |
| | | II | 30 | 100 | 73.3 | |
| | | III | 30 | 46.7 | 22.5 | |
| | | Average | 30 | 56.7 | 35.0 | |

In Table 1, as for the disease incidence in the untreated plot, the average of the disease severity was 35, and therefore, the test conditions were moderate incidence conditions. In the plot with the spraying of streptomycin, an effect on Chinese cabbage soft rot was not observed at all. On the other hand, in the plot with the treatment with fluazinam of the invention, a control effect on Chinese cabbage soft rot was observed.

Example 2

(1) Preparation of spray solution

Preparation was performed using 500 g/L of 3-chloro-N-(3-chloro-5-trifluoromethyl-2-pyridyl)-alpha,alpha,alpha-trifluoro-2,6-dinit ro-p-toluidine (fluazinam, Frowncide SC (trade name), manufactured by Ishihara Sangyo Kaisha, Ltd.) such that the amount of the active ingredient was 250 g ai/10 a (500 mL product/10 a), and the amount of dilution water was 150 L/10 a.

(2) Test for disease control of Chinese cabbage

A mulch-sheet for agricultural use was spreaded on soil, and planting holes for settlement (diameter: about 5 cm) were made, and then, the spray solution prepared in the above was sprayed onto the planting holes such that the spraying amount was 0.25 g/m$^2$ (150 L/10 a), followed by air-drying. Then, seedlings of Chinese cabbage (cultivar: Yumebuki) grown for 4 weeks in a cell tray (128 holes/nursery box) were planted such that 34 to 40 seedlings were planted in one test plot having an area of 4.8 m$^2$ with three replications.

The degree of disease incidence was examined for all the plants in each test plot 50 days after the start of the test, and the disease severity and the disease control value were evaluated. Incidentally, the disease severity and the disease control value were obtained in the same manner as described above. The test results are shown in Table 2.

[Table 2]

| Active ingredient | Amount of active ingredient | Replication | Number of plants examined | Disease incidence rate | Disease severity | Disease control value |
|---|---|---|---|---|---|---|
| Fluazinam | 250 9 ai/10 a  150 L/10 a | I | 40 | 55.0 | 19.4 | 66.4 |
| | | II | 40 | 37.5 | 13.1 | |
| | | III | 39 | 43.6 | 16.7 | |
| | | Average | 40 | 45.4 | 16.4 | |
| Untreated plot | | I | 39 | 76.9 | 35.9 | |
| | | II | 38 | 86.8 | 56.6 | |
| | | III | 39 | 87.2 | 53.8 | |
| | | Average | 39 | 83.6 | 48.8 | |

In Table 2, as for the disease incidence in the untreated plot, the average of the disease severity was 48.8, and therefore, the test conditions were high incidence conditions. The control effect of fluazinam on Chinese cabbage soft rot was observed.

Example 3

(1) Preparation of spray solution

Preparation was performed using 500 g/L of 3-chloro-N-(3-chloro-5-trifluoromethyl-2-pyridyl)-alpha,alpha,alpha-trifluoro-2,6-dinit ro-p-toluidine (fluazinam, Frowncide SC (trade name), manufactured by Ishihara Sangyo Kaisha, Ltd.) such that the amount of the active ingredient was 62.5 g ai/10 a (125 mL product/10 a), 125 g ai/10 a (250 mL product/10 a), and 250 g ai/10 a (500 mL product/10 a), and each amount of dilution water was 150 L/10 a.

(2) Test for disease control of Chinese cabbage

A mulch-sheet for agricultural use was spreaded on soil, and planting holes for settlement (diameter: about 9 cm) were made, and then, the spray solution prepared in the above was sprayed onto the planting holes such that the amount of treated active ingredient was 0.0625 g/m$^2$ (150 L/10 a) in the case of the spray solution containing the active ingredient at 62.5 g ai/10 a, 0.125 g/m$^2$ (150 L/10 a) in the case of the spray solution containing the active ingredient at 125 g ai/10 a, and 0.25 g/m$^2$ (150 L/10 a) in the case of the spray solution containing the active ingredient at 250 g ai/10 a, followed by air-drying. Then, seedlings of Chinese cabbage (cultivar: Musou) grown for 4 weeks in a cell tray (128 holes/nursery box) were planted such that 30 seedlings were planted in one test plot having an area of 6 m$^2$ with two replications.

Comparative example 2

(1) Preparation of spray solution

Preparation was performed by diluting streptomycin (Mycin 20 wettable powder (trade name), manufactured by Hokko Chemical Industry Co., Ltd.) with water to 1/1000.

(2) Test for disease control of Chinese cabbage

In a field covered with a mulch-sheet for agricultural use, seedlings of Chinese cabbage (cultivar: Musou) grown in a cell tray were planted, in the same manner as in Example 3, and foliage application was performed by spraying the spray solution of streptomycin prepared in (1) (spraying amount per application: 300 L/10 a) three times (13 days, 20 days, and 27 days after the planting of the seedlings).

The degree of disease incidence was examined for all the plants in each test plot 54 days after the start of the test, and the disease severity and the disease control value were evaluated. Incidentally, the disease severity and the disease control value were obtained in the same manner as described above. The test results are shown in Table 3.

[Table 3]

| Active ingredient | Amount of active ingredient or dilution ratio | Replication | Number of plants examined | Disease incidence rate | Disease severity | Disease control value |
|---|---|---|---|---|---|---|
| Fluazinam | 62.5 g ai/10 a 150 L/10 a | I | 30 | 100 | 26.7 | 28.7 |
| | | II | 30 | 100 | 37.5 | |
| | | Average | 30 | 100 | 32.1 | |
| Fluazinam | 125 g ai/10 a 150 L/10 a | I | 30 | 100 | 28.4 | 31.3 |
| | | II | 30 | 100 | 33.3 | |
| | | Average | 30 | 100 | 30.9 | |
| Fluazinam | 250 9 ai/10 a 150 L/10 a | I | 30 | 73.3 | 20 | 44.4 |
| | | II | 30 | 93.3 | 30 | |
| | | Average | 30 | 83.3 | 25 | |
| Streptomycin | 1/1000 dilution | I | 30 | 100 | 32.5 | 18.4 |
| | | II | 30 | 100 | 40.8 | |
| | | Average | 30 | 100 | 36.7 | |
| Untreated plot | | I | 30 | 100 | 29.2 | |
| | | II | 30 | 100 | 60.8 | |
| | | Average | 30 | 100 | 45 | |

In Example 3, in order to confirm the control effect of fluazinam on Chinese cabbage soft rot according to a difference in the spraying amount, the test was performed such that the amount of treated active ingredient was set to 62.5 g ai/10 a, 125 g ai/10 a, and 250 g ai/10 a.

In Table 3, as for the disease incidence in the untreated plot, the average of the disease severity was 45, and therefore, the test conditions were moderate incidence conditions. In the disease control test in Example 3, as compared with the treatment by foliage application of streptomycin, a higher control effect on Chinese cabbage soft rot was observed even when the amount of treated active ingredient was 62.5 g ai/10 a or 125 g ai/10 a, which is less than 250 g ai/10 a.

Example 4

(1) Preparation of spray solution

Preparation was performed using 500 g/L of 3-chloro-N-(3-chloro-5-trifluoromethyl-2-pyridyl)-alpha,alpha,alpha-trifluoro-2,6-dinit ro-p-toluidine (fluazinam, Frowncide SC (trade name), manufactured by Ishihara Sangyo Kaisha, Ltd.) such that the amount of the active ingredient was 62.5 g ai/10 a (125 mL product/10 a), 125 g ai/10 a (250 mL product/10 a), and 250 g ai/10 a (500 mL product/10 a), and each amount of dilution water was 150 L/10 a.

(2) Test for disease control of Chinese cabbage

A mulch-sheet for agricultural use was spreaded on soil, and planting holes for settlement (diameter: about 5 cm) were made, and then, the spray solution prepared in the above was sprayed onto the planting holes such that the amount of treated active ingredient was 0.0625 g/m$^2$ (150 L/10 a) in the case of the spray solution containing the active ingredient at 62.5 g ai/10 a, 0.125 g/m$^2$ (150 L/10 a) in the case of the spray solution containing the active ingredient at 125 g ai/10 a, and 0.25 g/m$^2$ (150 L/10 a) in the case of the spray solution containing the active ingredient at 250 g ai/10 a, followed by air-drying. Then, seedlings of Chinese cabbage (cultivar: Harebutai 65) grown for 4 weeks in a cell tray (128 holes/nursery box) were planted such that 19 seedlings were planted in one test plot having an area of 2.4 m$^2$ with two replications.

Comparative example 3

(1) Preparation of spray solution

Preparation was performed by diluting streptomycin (Mycin 20 wettable powder (trade name), manufactured by Hokko Chemical Industry Co., Ltd.) with water to 1/1000.

(2) Test for disease control of Chinese cabbage

In a field covered with a mulch-sheet for agricultural use, seedlings of Chinese cabbage (cultivar: Harebutai 65) grown in a cell tray were planted, in the same manner as in Example 4, and foliage application was performed with a sprayer by spraying the spray solution of streptomycin prepared in (1) (spraying amount per application: 300 L/10 a) twice (27 days and 48 days after the planting of the seedlings).

The degree of disease incidence was examined for all the plants in each test plot 64 days after the start of the test, and the disease severity and the disease control value were evaluated. Incidentally, the disease severity and the disease control value were obtained in the same manner as described above. The test results are shown in Table 4.

[Table 4]

| Active ingredient | Amount of active ingredient or dilution ratio | Replication | Number of plants examined | Disease incidence rate | Disease severity | Disease control value |
|---|---|---|---|---|---|---|
| Fluazinam | 62.5 g ai/10 a 150 L/10 a | I | 19 | 36.8 | 9.2 | 56.3 |
| | | II | 19 | 52.6 | 18.4 | |
| | | Average | 19 | 44.7 | 13.8 | |
| Fluazinam | 125 g ai/10 a 150 L/10 a | I | 16 | 22.2 | 6.9 | 66.8 |
| | | II | 18 | 50.0 | 14.1 | |
| | | Average | 17 | 36.1 | 10.5 | |
| Fluazinam | 250 g ai/10 a 150 L/10 a | I | 17 | 23.5 | 5.9 | 73.1 |
| | | II | 18 | 38.9 | 11.1 | |
| | | Average | 18 | 31.2 | 8.5 | |
| Streptomycin | 1/1000 dilution | I | 18 | 44.4 | 13.9 | 52.8 |
| | | II | 19 | 63.2 | 15.8 | |
| | | Average | 19 | 53.8 | 14.9 | |
| Untreated plot | | I | 19 | 73.7 | 26.3 | |
| | | II | 19 | 84.2 | 36.8 | |
| | | Average | 19 | 79.0 | 31.6 | |

In Example 4, the test for disease control of Chinese cabbage was performed by changing the treated active ingredient amount of fluazinam in the same manner as in Example 3. In Comparative example 3, the test for disease control of Chinese cabbage in the case of foliage application of streptomycin was performed.

In Table 4, as for the disease incidence in the untreated plot, the average of the disease severity was 31.6, and therefore, the test conditions were moderate incidence conditions. As compared with the case of the foliage application of streptomycin, a higher control effect on Chinese cabbage soft rot was observed even when the amount of treated active ingredient was 62.5 g ai/10 a or 125 g ai/10 a, which is less than 250 g ai/10 a.

Example 5

(1) Preparation of spray solution

Preparation was performed using 500 g/L of 3-chloro-N-(3-chloro-5-trifluoromethyl-2-pyridyl)-alpha,alpha,alpha-trifluoro-2,6-dinit ro-p-toluidine (fluazinam, Frowncide SC (trade name), manufactured by Ishihara Sangyo Kaisha, Ltd.) such that the amount of the active ingredient was 250 g ai/10 a (500 mL product/10 a), and the amount of dilution water was 150 L/10 a.

(2) Test for disease control of Chinese cabbage

A mulch-sheet for agricultural use was spreaded on soil, and planting holes for settlement (diameter: about 5 cm) were made, and then, the spray solution prepared in the above was sprayed onto the planting holes such that the spraying amount was 0.25 $g/m^2$ (150 L/10 a), followed by air-drying. Then, seedlings of Chinese cabbage (cultivar: Harebutai 65) grown for 4 weeks in a cell tray (128 holes/nursery box) were planted such that 19 seedlings were planted in one test plot having an area of 2.4 $m^2$ with two replications.

The spray solution prepared in the above was sprayed onto the planting holes such that the spraying amount was 0.25 $g/m^2$ (150 L/10 a) without spreading a mulch-sheet for agricultural use, followed by air-drying. Then, seedlings of Chinese cabbage (cultivar: Harebutai 65) grown for 4 weeks in a cell tray (128 holes/nursery box) were planted such that 19 seedlings were planted in one test plot having an area of 2.4 $m^2$ with two replications.

The degree of disease incidence was examined for all the plants in each test plot 64 days after the start of the test, and the disease severity and the disease control value were evaluated. Incidentally, the disease severity and the disease control value were obtained in the same manner as described above. The test results are shown in Table 5.

[Table 5]

| Active ingredient (with or without mulch-sheet for agricultural use) | Amount of active ingredient | Replication | Number of plants examined | Disease incidence rate | Disease severity | Disease control value |
|---|---|---|---|---|---|---|
| Fluazinam (with mulch-sheet for agricultural use) | 250 g ai/10 a 150 L/10 a | I | 17 | 23.5 | 5.9 | 73.1 |
| | | II | 18 | 38.9 | 11.1 | |
| | | Average | 18 | 31.2 | 8.5 | |
| Fluazinam (without mulch-sheet for agricultural use) | 250 g ai/10 a 150 L/10 a | I | 16 | 18.8 | 4.7 | 72.8 |
| | | II | 18 | 38.9 | 12.5 | |
| | | Average | 17 | 28.9 | 8.6 | |
| Untreated plot | | I | 19 | 73.7 | 26.3 | |
| | | II | 19 | 84.2 | 36.8 | |
| | | Average | 19 | 79 | 31.6 | |

In Example 5, the test for disease control of Chinese cabbage of fluazinam was performed by providing a test plot covered with a mulch-sheet for agricultural use and a test plot without being covered therewith.

In Table 5, as for the disease incidence in the untreated plot, the average of the disease severity was 31.6, and therefore, the test conditions were moderate incidence conditions. As for the control effect of fluazinam on Chinese cabbage soft rot, even in the treated plot without being covered with a mulch-sheet for agricultural use, the disease control value was 72.8, and an effect substantially equal to that of the treated plot covered with a mulch-sheet for agricultural use was observed. By applying fluazinam onto a surface of soil, a control effect on Chinese cabbage soft rot was observed regardless of with or without a mulch-sheet for agricultural use.

Reference test example: Test for growth inhibition of potato Erwinia carotovora A test for growth inhibition of Erwinia carotovora in the case of direct application of the control agent to Erwinia carotovora was performed. To previously melted PSA medium (55 degrees C), a predetermined amount of a pesticide 3-chloro-N-(3-chloro-5-trifluoromethyl-2-pyridyl)-alpha,alpha,alpha-trifluoro-2,6-dinit ro-p-toluidine (fluazinam, Frowncide SC (trade name), manufactured by Ishihara Sangyo Kaisha, Ltd.), ethaboxam wettable powder (Ethaboxam, Gardian (trade name), manufactured by LG Chemical), or streptomycin (Mycin wettable powder (trade name), manufactured by Hokko Chemical Industry Co., Ltd.) and a suspension of Erwinia carotovora (potato Erwinia carotovora) were added and the resulting mixture was stirred well, and then, poured in a plate. Then, the plate was cultured at 25 degrees C for 4 days, and the growing state of Erwinia carotovora was examined. Thereafter, the formed colonies were examined according to the following three criteria.

+: Equal to the colonies of the untreated group

Plus or minus: Apparently less than the colonies of the untreated group

-: Almost no colonies

The test results are shown in Table 6.

[Table 6]

| Control active ingredient | Active ingredient concentration (ppm) | | | | |
|---|---|---|---|---|---|
| | 1000 | 500 | 100 | 10 | 1 |
| Fluazinam | ±, ± | +, + | +, + | Not done I | Not done |
| Ethaboxam WP | +, + | +, + | +, + | Not done I | Not done |
| Streptomycin | Not done | Not done | Not done | -,- | -,- |

In Table 6, fluazinam and ethaboxam did not inhibit the growth of Erwinia carotovora although the treatment was performed at an active ingredient concentration of 1000 ppm, and an antibacterial activity against Erwinia carotovora thereof was not observed directly. On the other hand, through application of streptomycin which is an antibiotic, an antibacterial activity against Erwinia carotovora was observed directly at an active ingredient concentration of 1 ppm.

The invention has industrial applicability as using a control agent having a control effect on soft rot and a control method for soft rot using the control agent.

**Claims**

1. Use of a control agent for soft rot of a plant, the control agent comprising 3-chloro-N-(3-chloro-5-trifluoromethyl-2-pyridyl)-alpha,alpha,alpha-trifluoro-2,6-dinitrop-toluidine as an active ingredient.

2. Use of the control agent for soft rot according to claim 1, wherein the control agent is a control agent to be applied to plant cultivation soil.

3. A control method for soft rot of a plant, comprising applying an effective amount of 3-chloro-N-(3-chloro-5-trifluoromethyl-2-pyridyl)-alpha,alpha,alpha-trifluoro-2,6-dinitro-p-toluidine to plant cultivation soil.

4. The control method for soft rot according to claim 3, comprising applying an effective amount of 3-chloro-N-(3-chloro-5-trifluoromethyl-2-pyridyl)-alpha,alpha,alphatrifluoro-2,6-dinitro-p-toluidine to plant cultivation soil, and thereafter sowing seeds of a plant or planting seedlings of a plant therein.

5. The control method for soft rot according to claim 3 or 4, comprising applying an effective amount of 3-chloro-N-(3-chloro-5-trifluoromethyl-2-pyridyl)-alpha,alpha, alpha-trifluoro-2,6-dinitro-p-toluidine onto a surface of the cultivation soil without mixing in the cultivation soil.

6. The control method for soft rot according to claim 5, wherein an amount of 3-chloro-N-(3-chloro-5-trifluoromethyl-2-pyridyl)-alpha,alpha,alpha-trifluoro-2,6-dinitro-p-toluidine applied to the cultivation soil is from 0.025 to 2.5 g/m$^2$.

7. Use of the control agent for soft rot according to claim 1 or 2, wherein the plant is a vegetable.

8. Use of the control agent for soft rot according to claim 7, wherein the vegetable is at least one kind selected from the group consisting of asparagus, endive, calla, cauliflower, cabbage, amorphophallus konjac, Brassica campestris, celery, Japanese radish, tobacco, onion, qing-geng-cai, tomato, eggplant, carrot, green onion, Chinese cabbage, Brassica oleracea x Brassica campestris, parsley, potato, broccoli, rakkyo, lettuce, wasabi and oil-seed rape.

9. The control method for soft rot according to any one of claims 3 to 6, wherein the plant is a vegetable.

10. The control method for soft rot according to claim 9, wherein the vegetable is at least one kind selected from the group consisting of asparagus, endive, calla, cauliflower, cabbage, amorphophallus konjac, Brassica campestris, celery, Japanese radish, tobacco, onion, qing-geng-cai, tomato, eggplant, carrot, green onion, Chinese cabbage, Brassica oleracea x Brassica campestris, parsley, potato, broccoli, rakkyo, lettuce, wasabi and oil-seed rape.

**Patentansprüche**

1. Verwendung eines Bekämpfungsmittels gegen Nassfäule einer Pflanze, wobei das Bekämpfungsmittel 3-Chlor-N-(3-chlor-5-trifluormethyl-2-pyridyl)-alpha,alpha,alpha-trifluor-2,6-dinitro-p-toluidin als Wirkstoff umfasst.

2. Verwendung des Bekämpfungsmittels gegen Nassfäule nach Anspruch 1, wobei das Bekämpfungsmittel ein Bekämpfungsmittel ist, das auf den Pflanzenbauboden angewendet wird.

3. Bekämpfungsverfahren gegen Nassfäule einer Pflanze, umfassend das Anwenden einer wirksamen Menge von 3-Chlor-N-(3-chlor-5-trifluormethyl-2-pyridyl)-alpha,alpha,alpha-trifluor-2,6-dinitro-p-toluidin auf den Pflanzenbauboden.

4. Bekämpfungsverfahren gegen Nassfäule nach Anspruch 3, umfassend das Anwenden einer wirksamen Menge von 3-Chlor-N-(3-chlor-5-trifluormethyl-2-pyridyl)-alpha,alpha,alpha-trifluor-2,6-dinitro-p-toluidin auf den Pflanzenbauboden und anschließend das Säen von Samen einer Pflanze oder Pflanzensämlingen darin.

5. Bekämpfungsverfahren gegen Nassfäule nach Anspruch 3 oder 4, umfassend das Anwenden einer wirksamen Menge von 3-Chlor-N-(3-chlor-5-trifluormethyl-2-pyridyl)-alpha,alpha,alpha-trifluor-2,6-dinitro-p-toluidin auf eine Oberfläche des Baubodens ohne das Einmischen in den Bauboden.

6. Bekämpfungsverfahren gegen Nassfäule nach Anspruch 5, wobei eine auf den Bauboden angewendete Menge von 3-Chlor-N-(3-chlor-5-trifluormethyl-2-pyridyl)-alpha,alpha,alpha-trifluor-2,6-dinitro-p-toluidin 0,025 bis 2,5 g/m$^2$ beträgt.

7. Verwendung des Bekämpfungsmittels gegen Nassfäule nach Anspruch 1 oder 2, wobei die Pflanze ein Gemüse ist.

8. Verwendung des Bekämpfungsmittels gegen Nassfäule nach Anspruch 7, wobei das Gemüse mindestens eine Art ist, ausgewählt aus der Gruppe, bestehend aus Spargel, Endivie, Calla, Blumenkohl, Kohl, Amorphophallus konjac, Brassica campestris, Sellerie, Japanischen Rettich, Tabak, Zwiebel, Qing-geng-cai, Tomate, Aubergine, Mohrrübe, Frühlingszwiebel, Chinakohl, Brassica oleracea x Brassica campestris, Petersilie, Kartoffel, Brokkoli, Rakkyo, Salat, Wasabi und Rapsölsamen.

9. Bekämpfungsverfahren gegen Nassfäule nach einem der Ansprüche 3 bis 6, wobei die Pflanze ein Gemüse ist.

10. Bekämpfungsverfahren gegen Nassfäule nach Anspruch 9, wobei das Gemüse mindestens eine Art ist, ausgewählt aus der Gruppe, bestehend aus Spargel, Endivie, Calla, Blumenkohl, Kohl, Amorphophallus konjac, Brassica campestris, Sellerie, Japanischen Rettich, Tabak, Zwiebel, Qing-geng-cai, Tomate, Aubergine, Mohrrübe, Frühlingszwiebel, Chinakohl, Brassica oleracea x Brassica campestris, Petersilie, Kartoffel, Brokkoli, Rakkyo, Salat, Wasabi und Rapsölsamen.

**Revendications**

1. Utilisation d'un agent de lutte contre la pourriture molle d'une plante, l'agent de lutte comprenant de la 3-chloro-N-(3-chloro-5-trifluorométhyle-2-pyridyle)-alpha,alpha,alpha-trifluoro-2,6-dinitro-p-toluidine en tant qu'ingrédient actif.

2. Utilisation de l'agent de lutte contre la pourriture molle selon la revendication 1, dans laquelle l'agent de lutte est un agent de lutte à appliquer à un sol de culture de plante.

3. Procédé de lutte contre la pourriture molle d'une plante, comprenant l'application d'une quantité efficace de 3-chloro-N-(3-chloro-5-trifluorométhyle-2-pyridyle)-alpha,alpha,alpha-trifluoro-2,6-dinitro-p-toluidine à un sol de culture de plantes.

4. Procédé de lutte contre la pourriture molle selon la revendication 3, comprenant l'application d'une quantité efficace de 3-chloro-N-(3-chloro-5-trifluorométhyle-2-pyridyle)-alpha,alpha,alphatrifluoro-2,6-dinitro-p-toluidine à un sol de culture de plantes, et ensuite le semis de graines d'une plante ou la plantation de jeunes plants d'une plante à l'intérieur du sol.

5. Procédé de lutte contre la pourriture molle selon la revendication 3 ou 4, comprenant l'application d'une quantité efficace de 3-chloro-N-(3-chloro-5-trifluorométhyle-2-pyridyle)-alpha,alpha,alphatrifluoro-2,6-dinitro-p-toluidine sur une surface du sol de culture, sans mélange dans le sol de culture.

6. Procédé de lutte contre la pourriture molle selon la revendication 5, dans lequel une quantité de 3-chloro-N-(3-chloro-5-trifluorométhyle-2-pyridyle)-alpha,alpha,alpha-trifluoro-2,6-dinitro-p-toluidine appliquée au sol de culture est de 0,025 à 2,5 g/m$^2$.

7. Utilisation de l'agent de lutte contre la pourriture molle selon la revendication 1 ou 2, dans laquelle la plante est un légume.

8. Utilisation de l'agent de lutte contre la pourriture molle selon la revendication 7, dans lequel le légume est au moins un type choisi dans le groupe constitué par l'asperge, l'endive, la calla, le chou-fleur, le chou, l'amorphophallus konjac, le Brassica campestris, le céleri, le radis blanc, le tabac, l'oignon, le bok choy, la tomate, l'aubergine, la carotte, la ciboule, le chou chinois, le croisement Brassica oleracea-Brassica campestris, le persil, la pomme de terre, le brocoli, l'oignon de Chine, la laitue, le wasabi et le colza oléagineux.

9. Procédé de lutte contre la pourriture molle selon l'une quelconque des revendications 3 à 6, dans lequel la plante est un légume.

10. Procédé de lutte contre la pourriture molle selon la revendication 9, dans lequel le légume est au moins un type choisi dans le groupe constitué par l'asperge, l'endive, la calla, le chou-fleur, le chou, l'amorphophallus konjac, le Brassica campestris, le céleri, le radis blanc, le tabac, l'oignon, le bok choy, la tomate, l'aubergine, la carotte, la ciboule, le chou chinois, le croisement Brassica oleracea-Brassica campestris, le persil, la pomme de terre, le brocoli, l'oignon de Chine, la laitue, le wasabi et le colza oléagineux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56092272 A
- US 3965109 A
- WO 2005092104 A